# EUROPÄISCHE PATENTSCHRIFT

(11) **EP 3 094 526 B1**
(45) Veröffentlichungstag und Bekanntmachung des Hinweises auf die Patenterteilung: **22.05.2019**
(21) Anmeldenummer: 15700246.0
(22) Anmeldetag: 14.01.2015
(51) Int. Cl.: B60S 9/08

(54) **HÖHENVERSTELLBARE STÜTZE FÜR EIN FAHRZEUG**
HEIGHT-ADJUSTABLE SUPPORT FOR A VEHICLE
APPUI RÉGLABLE EN HAUTEUR POUR UN VÉHICULE

(30) Priorität: 14.01.2014 DE 102014200480
(43) Veröffentlichungstag der Anmeldung: 23.11.2016
(73) Patentinhaber: SAF-HOLLAND GmbH, 63856 Bessenbach (DE)
(72) Erfinder: RIEDL, Reinhold, 14089 Berlin (DE)
(74) Vertreter: Müller Schupfner & Partner Patent- und Rechtsanwaltspartnerschaft mbB
(86) Internationale Anmeldenummer: PCT/EP2015/050530
(87) Internationale Veröffentlichungsnummer: WO 2015/107055

(56) Entgegenhaltungen:
- WO-A2-99/54178
- DE-A1- 19 616 704
- US-A1- 2004 080 125
- US-A1- 2007 182 148
- US-A1- 2014 008 905

## Beschreibung

Die Erfindung betrifft eine höhenverstellbare Stütze für ein Fahrzeug, insbesondere einen Sattelauflieger. Im vorderen Bereich eines Sattelaufliegers sind üblicherweise paarweise höhenverstellbare Stützen angebracht, um den Sattelauflieger abzustützen, wenn dieser von seiner Zugmaschine abgekoppelt ist. Bekannte Stützen lassen sich in einem sogenannten Schnellgang in ihre Abstützstellung ausfahren sowie in die Transportstellung einfahren. Dies erfolgt üblicherweise über eine an der Stütze angebrachte Handkurbel, die über ein Getriebe eine im Inneren der Stütze verlaufende Spindel antreibt. Häufig ist es zudem beim Aufsatteln erforderlich, unter Last ein Anheben oder Absenken des Sattelaufliegers vorzunehmen, beispielsweise aufgrund von Bodenunebenheiten oder voneinander abweichenden Höhen unterschiedlicher Zugmaschinen. Für diesen Fall verfügen die Antriebsmechanismen bekannter Stützen über einen Lastgang, welcher eine stärkere Untersetzung aufweist als der Schnellgang. Auch der Hub- oder Absenkvorgang unter Last erfolgt üblicherweise manuell über eine an der Stütze angeordnete Handkurbel.

Höhenverstellbare Stützen der genannten Art sind beispielsweise in EP 2 163 444 A1 oder DE 20 2009 009 952 U1 beschrieben.

Um den Arbeitsaufwand beim Anheben beziehungsweise Absenken des Sattelaufliegers zu verringern, ist es zudem bekannt, eine motorische Antriebseinheit zum Aus- und Einfahren der Stütze vorzusehen. Eine Anordnung eines Motors an paarweise montierten Stützwinden ist in der DE 102 41 905 A1 beschrieben. Hierbei greift ein Motor mit seiner Antriebswelle an einer Verbindungswelle zwischen zwei Stützwinden an und stützt sich an einer relativ zum Motor ortsfesten Komponente ab. Zudem ist eine Handkurbel vorgesehen, um bei einem Ausfall des Motors die Stützwinden manuell ein- und ausfahren zu können. Die zwischen den beiden Stützwinden angeordnete und angetriebene Verbindungswelle liegt, ausgehend vom Kurbeltrieb am Getriebe mit einer großen Übersetzung ins Langsame, kraftflussmäßig bereits in einem hohen Lastmomentbereich. Im weiteren Kraftfluss zum Hubspindeltrieb jeder Stütze erfolgt jeweils über eine Kegelradstufe nur noch eine geringe Untersetzung. Der an der Verbindungswelle zwischen den Stützwinden angeordnete Motor muss daher für ein hohes Drehmoment ausgelegt sein, welches in der genannten Druckschrift mit 5 bis 15 Nm beziffert wird. Darüber hinaus kann auch die Montage des Motors unterhalb des Sattelaufliegers beschwerlich sein.

Die US-2004/0080125 A1, US-2007/0182148 A1 und WO 99/54178 A2 betreffen höhenverstellbare Stützwinden für Sattelauflieger mit einem Stützenaußenrohr, das ortsfest an einem Fahrzeug montiert ist, und einem Stützeninnenrohr, welches verschiebbar in dem Stützenaußenrohr gelagert ist und über eine Antriebsspindel aus dem Stützenaußenrohr ausfahrbar und in das Stützenaußenrohr einfahrbar ist, sowie eine Getriebeeinheit, um die Verlagerung des Stützeninnenrohrs zu bewirken.

Der Erfindung liegt die Aufgabe zugrunde, eine höhenverstellbare Stütze für ein Fahrzeug anzugeben, welche einfach ein- und auszufahren sowie möglichst robust aufgebaut ist.

Die Aufgabe wird erfindungsgemäß durch eine höhenverstellbare Stütze mit den Merkmalen des Anspruchs 1 gelöst. Bevorzugte Ausgestaltungen der Erfindung sind in den abhängigen Ansprüchen sowie in der nachfolgenden Beschreibung, insbesondere im Zusammenhang mit den beiliegenden Figuren, angegeben.

Erfindungsgemäß umfasst die höhenverstellbare Stütze ein Stützenaußenrohr, welches ortsfest an dem Fahrzeug montierbar ist, ein Stützeninnenrohr, welches verschiebbar in dem Stützenaußenrohr gelagert ist und über eine Antriebsspindel aus dem Stützenaußenrohr ausfahrbar und in das Stützenaußenrohr einfahrbar ist, zweckmäßigerweise einen Fuß zum Aufsetzen auf den Boden, welcher an einem unteren Ende des Stützeninnenrohres angebracht ist, eine in dem Stützenaußenrohr angeordnete Getriebeeinheit und eine Antriebseinheit zum Antreiben der Getriebeeinheit zum Verfahren des Stützeninnenrohres relativ zu dem Stützenaußenrohr. Die Antriebseinheit weist einen außerhalb des Querschnitts des Stützenaußenrohres angeordneten Motor sowie eine Übertragungseinheit auf, wobei eine durch die Motorwelle des Motors definierte Drehachse außerhalb des Stützenaußenrohres verläuft und die Übertragungseinheit eingerichtet ist, ein Drehmoment von der Motorwelle auf die in dem Stützenaußenrohr angeordnete Getriebeeinheit zu übertragen. Ein Grundgedanke der Erfindung kann darin gesehen werden, außerhalb des Querschnitts eines Stützrohres, welches durch das Stützenaußenrohr und das Stützeninnenrohr gebildet wird, eine Übertragungseinheit beziehungsweise ein weiteres Getriebe vorzusehen, das auch als Außengetriebe oder Zusatzgetriebe bezeichnet werden kann. Dieses Außengetriebe ist erfindungsgemäß im Kraftfluss zwischen dem Ausgang des Motors, also seiner Motorwelle beziehungsweise seinem Motorzapfen, und der in dem Stützenaußenrohr angeordneten Getriebeeinheit (Innengetriebe) angeordnet. Die Getriebeeinheit bzw. das Innengetriebe ist eingerichtet, das Stützeninnenrohr relativ zu dem Stützenaußenrohr zu verfahren, also das Stützrohr zu teleskopieren. Zum Bewegen des Stützeninnenrohres relativ zu dem Stützenaußenrohr kann beispielsweise eine Gewindespindel vorgesehen sein.

Das zusätzliche Außengetriebe ermöglicht vorteilhafterweise eine Anordnung des Motors seitlich neben dem Stützenaußenrohr, wo er einerseits gut zugänglich ist und andererseits vorzugsweise in einem montierten Zustand der Stütze nicht über die Außenabmessungen des Fahrzeugs hervorsteht. In dem montierten Zustand der Stütze am Fahrzeug befindet sich der Motor hierbei insbesondere in Fahrtrichtung gesehen vor oder hinter dem Stützenaußenrohr. Der Motor kann insbesondere an einer lateralen Seite des Stützrohres derart positioniert sein, dass die Motorwelle seitlich entlang des Stützrohres verläuft, vorzugsweise etwa parallel außerhalb einer der Seitenflächen des Stützrohres, insbesondere des Stützenaußenrohres. Die Übertragungseinheit ist vorzugsweise auf eine Front- oder Vorderseite des Stützenaußenrohres aufgesetzt und erstreckt sich ausgehend von der Vorderseite in einen seitlichen (lateralen) Bereich, so dass sie seitlich, also in seitlicher Verlängerung der Vorderseite, über das Stützenaußenrohr übersteht. In diesem überstehenden Bereich kann der Motor angeflanscht sein, welcher sich auf diese Weise in einer seitlichen Lage zum Stützenaußenrohr anordnen lässt. Ein Getriebeeingang und ein Getriebeausgang der Übertragungseinheit (Außengetriebe) befinden sich vorzugsweise auf ein und derselben Seite der Übertragungseinheit.

In einer bevorzugten Ausgestaltung ist ein Anschlussbereich für eine Verbindungswelle vorgesehen, welche sich ausgehend von der in dem Stützenaußenrohr angeordneten Getriebeeinheit (Innengetriebe) in Richtung einer weiteren höhenverstellbaren Stütze erstreckt. Die Übertragungseinheit ist dann vorzugsweise auf einer gegenüberliegenden Seite des Stützenaußenrohres angeordnet, also einer Seite, welche dem Anschlussbereich für die Verbindungswelle und/oder der weiteren höhenverstellbaren Stütze gegenüberliegt. Das Stützenaußenrohr umfasst vorzugsweise, insbesondere an seiner Front- oder Vorderseite, eine Getriebeeingangsöffnung, welche an einer der Verbindungswelle gegenüberliegenden Seite des Stützenaußenrohres angeordnet ist. Die Vorderseite des Stützenaußenrohres beziehungsweise der gesamten Stütze weist im eingebauten Zustand vorzugsweise zur Seite des Fahrzeugs, also zur linken oder zur rechten Seite, und ist daher gut zugänglich. Die im Kraftfluss zwischen Motor und Getriebeeinheit angeordnete Übertragungseinheit ist vorzugsweise in einem separaten Gehäuse angeordnet, welches an der Vorderseite des Stützenaußenrohres montiert, beispielsweise verschraubt ist. Der Motor wiederum ist vorzugsweise an dem Gehäuse der Übertragungseinheit befestigt.

Die in dem Stützenaußenrohr angeordnete Getriebeeinheit umfasst vorzugsweise eine ins Langsame übersetzende Stirnradgetriebestufe sowie eine Kegelradgetriebestufe, welche der Stirnradgetriebestufe im Kraftfluss nachgelagert ist. In der mindestens einen Stirnradgetriebestufe wird die Drehzahl herabgesetzt und das Drehmoment erhöht. Die Kegelradgetriebestufe ist dazu vorgesehen, eine vorzugsweise horizontale Drehbewegung in der Stirnradgetriebestufe auf die vorzugsweise vertikal verlaufende Antriebsspindel zu übertragen beziehungsweise umzulenken. Hierbei findet vorzugsweise keine oder allenfalls noch eine geringe Drehzahlreduzierung (geringer als in der Stirnradgetriebestufe) statt. Die Verbindungswelle zu der weiteren Stütze des üblicherweise vorgesehenen Stützenpaares ist im Kraftfluss vorzugsweise zwischen der Stirnradgetriebestufe und der Kegelradgetriebestufe angeordnet, dreht sich also mit verringerter Geschwindigkeit. Die Übertragungseinheit ist dagegen vorzugsweise im Kraftfluss vor der Stirnradgetriebestufe angeordnet, um den Einsatz eines schnell drehenden Motors zu ermöglichen. Vorzugsweise verbindet die Übertragungseinheit kraftmäßig eine Motorausgangswelle des Motors mit einer hierzu parallelen Getriebeeingangswelle der Getriebeeinheit, insbesondere der Stirnradgetriebestufe. Unter einer seitlichen Anordnung des Motors relativ zu dem Stützenaußenrohr wird im Zusammenhang mit der Stirnradgetriebestufe der Getriebeeinheit insbesondere eine Anordnung an einer lateralen Seite neben dem Stützenaußenrohr verstanden, welche entlang mindestens einer Drehachse des Stirnradgetriebes verläuft. Diese Seite weist im eingebauten Zustand der Stütze vorzugsweise zur Front oder zum Heck des Fahrzeugs und liegt quer zur Vorder- und/oder Rückseite des Stützenaußenrohres bzw. Stützrohres.

Eine einfache Montage der Antriebseinheit an dem Stützenaußenrohr kann erfindungsgemäß dadurch erzielt werden, dass die Übertragungseinheit ein Gehäuse und ein aus dem Gehäuse vorstehendes beziehungsweise herausragendes Antriebsritzel aufweist, das in die in dem Stützenaußenrohr angeordnete Getriebeeinheit eingreift. Das Stützenaußenrohr weist hierzu eine entsprechende Getriebeeingangsöffnung auf, in welche das Antriebsritzel einführbar ist, um mit einem ersten Zahnrad des Getriebes, insbesondere der Stirnradgetriebestufe, in Eingriff gebracht zu werden. Das Gehäuse kann beispielsweise an die Vorder- oder Frontseite des Stützenaußenrohres angeschraubt sein, wobei hierunter insbesondere diejenige Seite des Stützenaußenrohres verstanden werden kann, welche quer zu mindestens einer Drehachse der Stirnradgetriebestufe verläuft und im eingebauten Zustand üblicherweise zur linken oder rechten Fahrzeugseite weist.

Eine besonders präzise und einfache Montage lässt sich dadurch erreichen, dass das Antriebsritzel in einer Zentrierbuchse gelagert ist, welche aus dem Gehäuse der Übertragungseinheit vorsteht und in einer Eingangsöffnung des Stützenaußenrohres aufgenommen ist. Das Antriebsritzel steht hierbei über die Zentrierbuchse hinaus vor, um mit einem Getriebeeingangsrad des in dem Stützenaußenrohr angeordneten Getriebes in Eingriff zu sein. Die Eingangsöffnung oder -bohrung ist vorzugsweise als Passbohrung ausgeführt, um die Zentrierbuchse passgenau aufzunehmen. Sie befindet sich vorzugsweise in einer Wand der Vorderseite des Stützenaußenrohres. Die Zentrierbuchse ist in dem Gehäuse der Übertragungseinheit gelagert und dort vorzugsweise formschlüssig gehalten. Vorzugsweise ist die Zentrierbuchse als Bundlagerbuchse ausgebildet und mit ihrem vorstehenden Bund in dem Gehäuse der Übertragungseinheit fixiert.

Die Übertragungseinheit weist zwischen der Motorwelle und dem Antriebsritzel vorzugsweise mindestens zwei Getrieberäder, insbesondere Stirnzahnräder, Reibräder oder Zugmittelräder, auf. Für eine möglichst flache Bauweise sind sämtliche Getrieberäder der Übertragungseinheit vorzugsweise in einer gemeinsamen Ebene angeordnet. Alternativ können die Getrieberäder zur Bereitstellung einer zusätzlichen Untersetzung auch in mehreren, vorzugsweise zwei, Ebenen angeordnet sein.

Zur Vermeidung von Schäden am Motor, zum Beispiel bei einem verzögerten Stopp oder einem Nachlauf beim Abschalten am Hubende der Stütze, ist vorzugsweise zumindest eines der Getrieberäder, insbesondere ein erstes und/oder ein letztes Getrieberad der Übertragungseinheit, auf einer Rutschnabe montiert, mit welcher es reibschlüssig verbunden ist.

Zur Erzielung einer möglichst geringen Bauhöhe der Übertragungseinheit ist es zudem vorteilhaft, dass die Übertragungseinheit zwischen der Motorwelle und dem Antriebsritzel ein Antriebsrad, ein Abtriebsrad und mindestens ein dazwischen angeordnetes Zwischenrad aufweist. Auf diese Weise können die einzelnen Räder, welche insbesondere Zahnräder oder Reibräder sein können, vergleichsweise klein dimensioniert werden. Der Abstand zwischen dem Antriebsrad und dem Abtriebsrad wird durch eines oder mehrere Zwischenräder überbrückt. Alternativ ist auch ein Zugmittelgetriebe möglich. Vorzugsweise sind sämtliche im Kraftfluss zwischen der Motorwelle und dem Antriebsritzel angeordneten Getrieberäder in einer gemeinsamen Ebene angeordnet. Vorzugsweise ist das Antriebsrad und/oder das Abtriebsrad auf einer Rutschnabe angeordnet.

Für eine besonders einfache Montage ist es bevorzugt, dass die Antriebseinheit eine vormontierbare Einheit bildet, welche an dem Stützenaußenrohr montierbar und zweckmäßigerweise demontierbar, insbesondere anschraubbar ist. Hierzu wird vorzugsweise zunächst der Motor an der Übertragungseinheit montiert und anschließend die aus Motor und Übertragungseinheit gebildete Baugruppe (Antriebseinheit) an dem Stützenaußenrohr angebracht. Die Antriebseinheit wird vorzugsweise an der Vorderseite des Stützenaußenrohres montiert, also derjenigen Seite, welche quer zu den Drehachsen der Getriebeeinheit (Innengetriebe), insbesondere deren Stirnradgetriebestufe, verläuft.

An der Frontseite des Stützrohres, insbesondere des Stützenaußenrohres, ist vorzugsweise des Weiteren eine Betätigungseinrichtung für ein manuelles Ein- beziehungsweise Ausfahren des Stützeninnenrohres vorgesehen. Die Betätigungsvorrichtung umfasst vorzugsweise einen Kurbeltrieb mit einer Handkurbel. Der Kurbeltrieb greift kraftmäßig, wie auch das Antriebsritzel, vorzugsweise am Eingang der Stirnradgetriebestufe an. Die manuelle Betätigungseinrichtung befindet sich vorzugsweise an der Vorderseite des Stützenaußenrohres neben und/oder oberhalb/unterhalb der Übertragungseinheit. Vorzugsweise ist die manuelle Betätigungsvorrichtung eingerichtet, ein Mitrotieren der Handkurbel bei einem Motorbetrieb zu vermeiden. Dies kann insbesondere dadurch erreicht werden, dass die Handkurbel in eine Leerlaufstellung einstellbar ist.

Die Antriebseinheit ist vorzugsweise an der Front- oder Vorderseite des Stützenaußenrohres, insbesondere in einem oberen Bereich etwa auf Höhe des Getriebes, angeflanscht und hängt auf diese Weise an dem Stützenaußenrohr. Das Antriebsritzel wird in Eingriff mit der Stirnradgetriebestufe gebracht und der Motor erhält eine Anordnung seitlich der Stütze. Die Übertragungseinheit kann auch als Vorgelege bezeichnet werden und ist vorzugsweise als Flachvorgelege ausgeführt. Sie weist nur eine geringe Tiefe, vorzugsweise maximal 10 Zentimeter, auf. Hierdurch erhöht die Übertragungseinheit und die gesamte Antriebseinheit nur geringfügig die Gesamttiefe der Stütze. Der Motor erhöht durch seine Lage (seitlich) neben der Stütze die Bautiefe der Stütze nicht.

Die Antriebseinheit befindet sich aufgrund der erfindungsgemäßen Konfiguration in einem Kraftflussbereich, in welchem nur ein geringes Antriebsdrehmoment erforderlich ist. Der Motor ist daher vorzugsweise für ein maximales Drehmoment von 5 Nm, vorzugsweise 3 Nm, ausgelegt, insbesondere ein Drehmoment von 1 bis 3 Nm.

Der Motor befindet sich - bei Betrachtung der Stütze von vorne, also in Richtung einer Drehachse der Stirnradgetriebestufe - räumlich hinter der Übertragungseinheit und seitlich neben der Stütze. Er befindet sich damit in einem geschützten Bereich angeordnet, so dass eine etwaige Beschädigungsgefahr minimiert ist. Durch die Montagemöglichkeit der vormontierten Baugruppe aus Motor und Übertragungseinheit wird gleichsam eine vereinfachte Montage gewährleistet.

Die Erfindung bezieht sich grundsätzlich auch in Alleinstellung auf eine Antriebseinheit zur Montage an dem Stützrohr einer Stütze.

Die Erfindung bezieht sich des Weiteren auf eine Stützvorrichtung für ein Fahrzeug, insbesondere einen Sattelauflieger, aufweisend zwei höhenverstellbare Stützen, welche antriebsmäßig über eine Verbindungswelle derart gekoppelt sind, dass beide Stützen über eine gemeinsame Antriebseinheit teleskopierbar sind, wobei eine der Stützen eine erfindungsgemäße Stütze ist. Die weitere Stütze wird über die Verbindungswelle angetrieben, so dass bei dieser die Antriebseinheit mit Motor und Übertragungseinheit sowie die Handkurbel entfallen können. Des Weiteren kann in der zweiten Stütze auf eine Stirnradgetriebestufe verzichtet werden und lediglich eine Kegelradgetriebestufe angeordnet sein, da hinter der Verbindungswelle allenfalls noch eine geringe Übersetzung ins Langsame erfolgt.

Hinsichtlich der ein Stützenpaar aufweisenden Stützvorrichtung ist es bevorzugt, dass der Motor der Antriebseinheit seitlich neben der zugeordneten Stütze angeordnet ist und das freie Ende der Motorwelle von der anderen Stütze weg weist.

Die Erfindung wird nachfolgend anhand einer beispielhaften Ausführungsform, welche in den beiliegenden Figuren dargestellt ist, weiter beschrieben. Es zeigt:

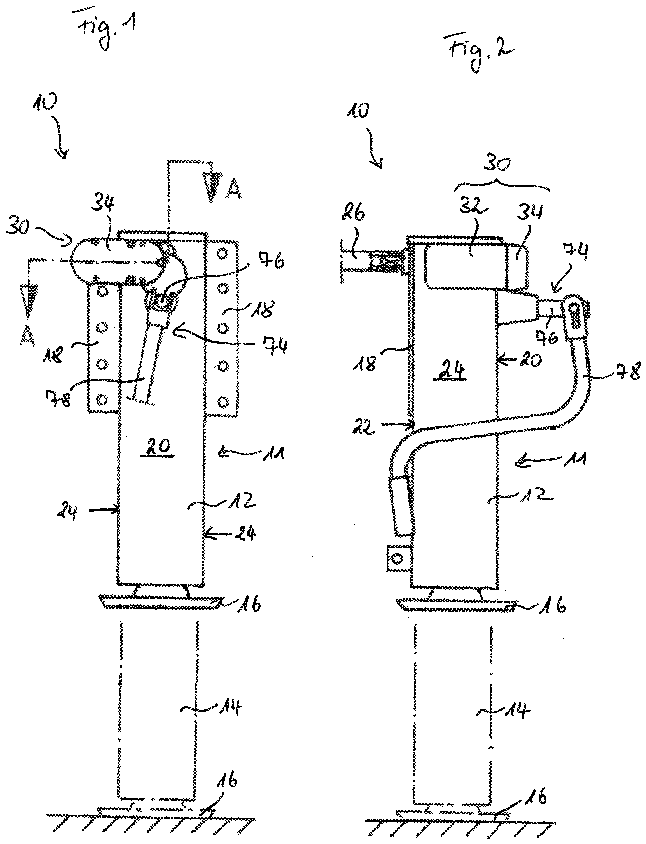

- Figur 1:: eine Vorderansicht einer erfindungsgemäßen Stütze;
- Figur 2:: eine Seitenansicht der in Figur 1 gezeigten Stütze; und

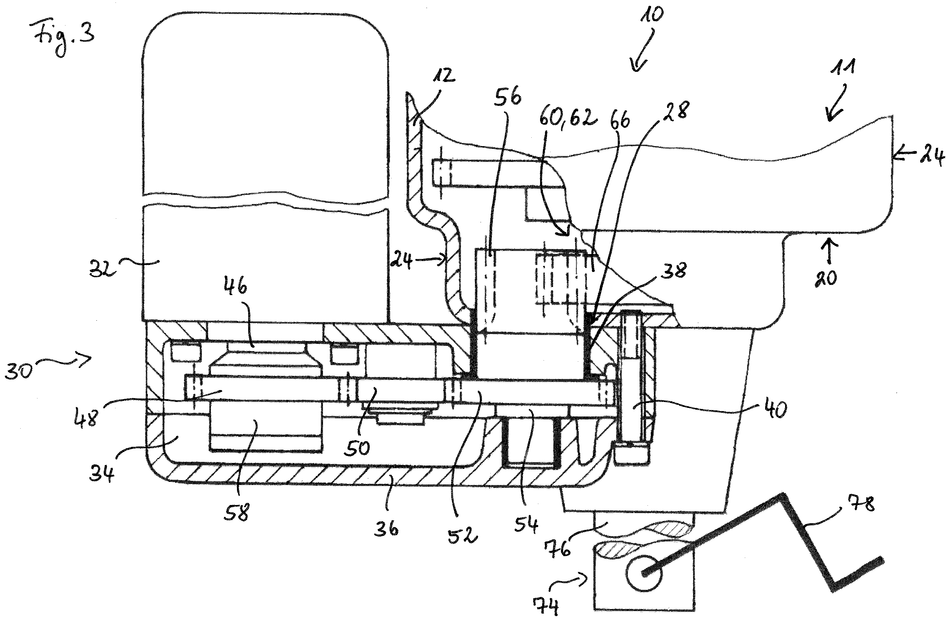

- Figur 3:: einen teilweisen Längsschnitt entlang der Linie A-A in Figur 1.

Gleiche oder gleichwirkende Elemente sind in sämtlichen Figuren mit denselben Bezugszeichen gekennzeichnet.

Eine erfindungsgemäße Stütze 10 umfasst ein Stützrohr 11 bestehend aus einem Stützenaußenrohr 12 und einem darin entlang einer Längsachse verschiebbar gelagerten Stützeninnenrohr 14. An einem unteren Ende des Stützeninnenrohrs 14 ist ein Fuß 16 zum Aufsetzen auf den Boden befestigt. Der Fuß 16 umfasst eine sich im Wesentlichen vertikal erstreckende Fußplatte. An dem Stützenaußenrohr 12 ist eine Anschraubplatte 18 befestigt, um das Stützenaußenrohr 12 ortsfest an einem Rahmen eines abzustützenden Fahrzeugs zu befestigen. Die Anschraubplatte 18 ist in der dargestellten Ausführungsform an einer Rückseite 22 der Stütze 10 montiert und steht über die lateralen Seiten 24 des Stützenaußenrohrs 12 vor. An einer Vorderseite 20 der Stütze 10 ist ein Kurbeltrieb 74 angeordnet, welcher eine Welle 76, die in das Stützenaußenrohr 12 hineinragt, sowie eine Handkurbel 78 umfasst.

Die Welle 76 des Kurbeltriebs 74 greift in eine Getriebeeinheit 60 ein, die in dem Stützrohr 11 angeordnet ist und eine drehmomenterhöhende Stirnradgetriebestufe 62 sowie eine im Kraftfluss dahinterliegende, nicht dargestellte Kegelradgetriebestufe aufweist, die mit einem nicht dargestellten Hubspindeltrieb bzw. einer Antriebsspindel in Eingriff ist. Die Antriebsspindel, welche mit dem Stützeninnenrohr 14 verbunden ist, verläuft senkrecht in dem Stützrohr 11 und dient dem Ein- und Ausfahren des Stützeninnenrohres 14 in das beziehungsweise aus dem Stützenaußenrohr 12. Die in dem Stützrohr 11 angeordnete Getriebeeinheit 60 kann analog der in der DE 20 2009 009 952 U1 oder EP 2 163 444 A1 beschriebenen Getriebeeinheit ausgeführt sein. Die entsprechenden Offenbarungen dieser Druckschriften sind hiermit durch Bezugnahme eingeschlossen.

Die Stirnradgetriebestufe kann ein-, zwei- oder mehrstufig ausgeführt sein. Im Kraftfluss zwischen der ins Langsame übersetzenden Stirnradgetriebestufe 62 und der Kegelradgetriebestufe ist eine Verbindungswelle 26 vorgesehen, welche die erfindungsgemäße Stütze 10 mit einer weiteren Stütze verbindet, derart, dass beide Stützen gleichzeitig ein- und ausgefahren werden können. Hierzu ist die Verbindungswelle 26 in der zweiten Stütze mit einer entsprechenden Kegelradgetriebestufe in Eingriff. Durch die Verbindungswelle 26 wird die Stütze 10 kraftschlüssig mit der Nachbarstütze verbunden. Die Verbindungswelle 26 erstreckt sich zwischen den jeweiligen Rückseiten 22 der miteinander verbundenen Stützen. Die Stützen lassen sich gemeinsam mit der Handkurbel 78 manuell zwischen einer ausgefahrenen Stützposition und einer eingefahrenen Transportposition verstellen.

Für einen motorischen Antrieb der Stütze 10 ist eine motorische Antriebseinheit 30 vorgesehen, welche an der Vorderseite 20 des Stützenaußenrohrs 12 der erfindungsgemäßen Stütze 10 montiert ist und einen Motor 32 sowie eine Getriebe- oder Übertragungseinheit 34 umfasst. Die Übertragungseinheit 34 ist an dem Stützenaußenrohr 12 mittels Befestigungselementen 40, wie beispielsweise Schrauben, befestigt und trägt ihrerseits den Motor 32. Der Motor 32 ist vor bzw. neben einer lateralen Seite 24 des Stützenaußenrohres 12 angeordnet, wobei die laterale Seite 24 quer zu der Vorderseite 20 ausgerichtet ist. Die Übertragungseinheit 34 ist außerhalb des Querschnitts des Stützenaußenrohrs 12 angeordnet.

Der Motor 32, insbesondere ein Elektromotor, umfasst eine Motorwelle 46, die rückseitig in ein Gehäuse 36 der Übertragungseinheit 34 hineinragt und deren Rotationsachse parallel zur Rotationsachse der Stirnradgetriebestufe 62 ist. Das Gehäuse 36 weist eine Länge, eine Höhe und eine Tiefe auf, wobei die Länge größer ist als die Höhe und die Höhe größer ist als die Tiefe. Die Länge des Gehäuses 36 erstreckt sich quer, insbesondere rechtwinkelig zur Motorwelle 46 und im eingebauten Zustand der Stütze etwa horizontal. Die Übertragungseinheit 34 ist als Flachvorgelege mit einer Tiefe von maximal etwa 10 Zentimetern ausgeführt. Die Tiefe erstreckt sich in Richtung der Motorwelle 46 und in Richtung der Drehachse(n) der Stirnradgetriebestufe 62.

Auf der Motorwelle 46, welche insbesondere parallel zur Welle 76 des Kurbeltriebs 74 verläuft, befindet sich ein Antriebszahnrad 48, welches beispielsweise mittels einer Rutschnabe 58 montiert sein kann. Das Antriebszahnrad 48 ist mit einem parallel hierzu angeordneten Zwischenzahnrad 50 in Eingriff, welches wiederum ein ebenfalls parallel hierzu angeordnetes Abtriebszahnrad 52 antreibt. Das Abtriebszahnrad 52 ist auf einer Abtriebswelle 54 angeordnet, welche parallel zur Motorwelle 46 ausgerichtet ist. Die Abtriebswelle 54 trägt des Weiteren ein Antriebsritzel 56, das, parallel zur Motorwelle 46, rückseitig aus dem Gehäuse 36 der Übertragungseinheit 34 hinausragt und mit der Getriebeeinheit 60 in dem Stützrohr 11, insbesondere mit der Stirnradgetriebestufe 62, in Eingriff ist. Das aus dem Gehäuse 36 überstehende Antriebsritzel 56 treibt ein im Stützenaußenrohr 12 angeordnetes Getriebeeingangszahnrad 66 der Getriebeeinheit 60 an, welches parallel zur Motorwelle 46 ausgerichtet und zu dieser versetzt ist. Hierzu ist im Stützenaußenrohr 12 eine Eingangsöffnung 28 vorhanden, durch welche vorzugsweise die Abtriebswelle 54 und/oder das Antriebsritzel 56 hindurchgeführt ist. Die Stirnradgetriebestufe 62 überträgt die Drehbewegung auf die Verbindungswelle 26, wobei die Drehzahl abgesenkt und das Drehmoment erhöht werden. Auf der langsam drehenden Verbindungswelle 26 sitzt ein nicht dargestelltes Kegelrad, welches mit einem weiteren nicht dargestellten Kegelrad kämmt, das auf der senkrecht in dem Stützrohr 11 verlaufenden Antriebsspindel sitzt. Die Antriebsspindel verlagert das Stützeninnenrohr 14 gegenüber dem Stützenaußenrohr 12. Vorteilhafterweise verlaufen die Rotationsebenen der Getrieberäder 48, 50, und/oder 52 der Übertragungseinheit 34 quer, insbesondere senkrecht, zur Rotationsachse der Stirnradgetriebestufe 62.

Für eine präzise Positionierung der Antriebseinheit 30 an dem Stützenaußenrohr 12 ist eine Zentrierbuchse 38 vorgesehen. Diese ist in dem Gehäuse 36 der Übertragungseinheit 34 gelagert und mit der Eingangsöffnung 28 des Stützenaußenrohres 12 in Eingriff. Die Eingangsöffnung 28 ist vorzugsweise als Passbohrung ausgeführt, zwischen der Zentrierbuchse 38 und der Passbohrung ist vorzugsweise eine Passung gebildet. Das Antriebsritzel 56 ist in der Zentrierbuchse 38 drehbar gelagert.

Ein Mitrotieren der Handkurbel 78 kann insbesondere dadurch vermieden werden, dass das auf der Abtriebswelle 54 sitzende Antriebsritzel 56 in eine Leerlaufstellung bringbar ist, in welcher es weder in ein Lastgangzahnrad noch ein Schnellgangzahnrad der Getriebeeinheit 60 eingreift. Es kann vorgesehen sein, dass diese Leerlaufstellung mittels eines Endschalters elektrisch quittiert wird, bevor der Motor 32 anlaufen kann.

Insgesamt wird mit der Erfindung eine kompakte und robuste Stütze zum Abstützen eines Fahrzeugs geschaffen. Die Antriebseinheit ist von einer Vorderseite des Stützrohres her montierbar, und der Motor ist durch seine Anordnung an einer Rückseite der Übertragungseinheit und seitlich des Stützrohres weitgehend vor Beschädigungen geschützt. Die erfindungsgemäße Anbindung an den Eingang der drehmomenterhöhenden Getriebestufe ermöglicht den Einsatz eines Motors, welcher für ein vergleichsweise geringes Drehmoment ausgelegt ist.

### Bezugszeichenliste

- 10: Stütze
- 11: Stützrohr
- 12: Stützenaußenrohr
- 14: Stützeninnenrohr
- 16: Fuß
- 18: Anschraubplatte
- 20: Vorderseite
- 22: Rückseite
- 24: Laterale Seite
- 25: Anschlussbereich
- 26: Verbindungswelle
- 28: Eingriffsöffnung
- 30: Antriebseinheit
- 32: Motor
- 34: Übertragungseinheit
- 36: Gehäuse
- 38: Zentrierbuchse
- 40: Befestigungselement
- 46: Motorwelle
- 48: Antriebsrad
- 50: Zwischenrad
- 52: Abtriebsrad
- 54: Abtriebswelle
- 56: Antriebsritzel
- 58: Rutschnabe
- 60: Getriebeeinheit
- 62: Stirnradgetriebestufe
- 66: Getriebeeingangszahnrad
- 74: Kurbeltrieb
- 76: Welle
- 78: Handkurbel

## Patentansprüche

1. Höhenverstellbare Stütze für ein Fahrzeug, insbesondere einen Sattelauflieger, aufweisend
ein Stützenaußenrohr (12), welches ortsfest an dem Fahrzeug montierbar ist,
ein Stützeninnenrohr (14), welches verschiebbar in dem Stützenaußenrohr (12) gelagert ist und über eine Antriebsspindel aus dem Stützenaußenrohr (12) ausfahrbar und in das Stützenaußenrohr (12) einfahrbar ist,
eine in dem Stützenaußenrohr (12) angeordnete Getriebeeinheit (60) und eine Antriebseinheit (30) zum Antreiben der Getriebeeinheit (60) zum Verfahren des Stützeninnenrohres (14) relativ zu dem Stützenaußenrohr (12), wobei die Antriebseinheit (30) einen außerhalb des Querschnitts des Stützenaußenrohres (12) angeordneten Motor (32) sowie eine Übertragungseinheit (34) aufweist, und wobei eine durch die Motorwelle (46) des Motors (32) definierte Drehachse außerhalb des Stützenaußenrohres (12) verläuft und die Übertragungseinheit (34) eingerichtet ist, ein Drehmoment von der Motorwelle (46) auf die in dem Stützenaußenrohr (12) angeordnete Getriebeeinheit (60) zu übertragen,
**dadurch gekennzeichnet, dass** die Übertragungseinheit (34) ein Gehäuse (36) und ein aus dem Gehäuse (36) vorstehendes Antriebsritzel (56) aufweist, das in die in dem Stützenaußenrohr (12) angeordnete Getriebeeinheit (60) eingreift.

2. Höhenverstellbare Stütze nach Anspruch 1,
wobei der Motor (32) seitlich neben dem Stützenaußenrohr (12) angeordnet ist.

3. Höhenverstellbare Stütze nach einem der vorhergehenden Ansprüche,
wobei ein Anschlussbereich (25) für eine Verbindungswelle (26) vorgesehen ist, welche sich ausgehend von der in dem Stützenaußenrohr (12) angeordneten Getriebeeinheit (60) in Richtung einer weiteren höhenverstellbaren Stütze erstreckt, und
wobei die Übertragungseinheit (34) auf einer Seite des Stützenaußenrohres (12) angeordnet ist, welche dem Anschlussbereich (25) für die Verbindungswelle (26) und/oder der weiteren höhenverstellbaren Stütze gegenüberliegt.

4. Höhenverstellbare Stütze nach einem der vorhergehenden Ansprüche,
wobei die in dem Stützenaußenrohr (12) angeordnete Getriebeeinheit (60) eine ins Langsame übersetzende Stirnradgetriebestufe (62) sowie eine nachgelagerte Kegelradgetriebestufe umfasst, und
wobei die Übertragungseinheit (34) vor der Stirnradgetriebestufe (62) angeordnet ist.

5. Höhenverstellbare Stütze nacheinem der vorhergehenden Ansprüche,
wobei das Antriebsritzel (56) in einer Zentrierbuchse (38) gelagert ist, welche aus dem Gehäuse (36) der Übertragungseinheit (34) vorsteht und in einer Eingangsöffnung (28) des Stützenaußenrohres (12) aufgenommen ist.

6. Höhenverstellbare Stütze nach einem der vorhergehenden Ansprüche,
wobei die Übertragungseinheit (34) zwischen der Motorwelle (46) und dem Antriebsritzel (56) mindestens zwei Getrieberäder aufweist.

7. Höhenverstellbare Stütze nach einem der vorhergehenden Ansprüche, wobei zumindest eines der Getrieberäder, insbesondere ein erstes und/oder ein letztes Getrieberad der Übertragungseinheit (34), auf einer Rutschnabe (58) montiert ist.

8. Höhenverstellbare Stütze nach einem der vorhergehenden Ansprüche,
wobei die Übertragungseinheit (34) zwischen der Motorwelle (46) und dem Antriebsritzel (56) ein Antriebsrad (48), ein Abtriebsrad (52) und mindestens ein dazwischen angeordnetes Zwischenrad (50) aufweist.

9. Höhenverstellbare Stütze nach einem der vorhergehenden Ansprüche,
wobei die Antriebseinheit (30) eine vormontierbare Einheit bildet, welche an dem Stützenaußenrohr (12) montierbar, insbesondere anschraubbar, ist.

10. Höhenverstellbare Stütze nach einem der vorhergehenden Ansprüche, wobei an der Frontseite des Stützrohres (11), insbesondere des Stützenaußenrohres (12), eine Betätigungseinrichtung für ein manuelles Ein- beziehungsweise Ausfahren des Stützeninnenrohres (14) vorgesehen ist, wobei die Betätigungsvorrichtung vorzugsweise einen Kurbeltrieb (74) mit einer Handkurbel (78) umfasst.

11. Höhenverstellbare Stütze nach einem der vorhergehenden Ansprüche, wobei die Antriebseinheit (30) an der Front- oder Vorderseite (20) des Stützenaußenrohres (12), insbesondere in einem oberen Bereich etwa auf Höhe des Getriebes (60), angeflanscht ist, und/oder der Motor (32) seitlich der Stütze (10) angeordnet ist.

12. Höhenverstellbare Stütze nach einem der vorhergehenden Ansprüche, wobei der Motor (32) - bei Betrachtung der Stütze (10) von vorne, also in Richtung einer Drehachse der Stirnradgetriebestufe (62) - räumlich hinter der Übertragungseinheit (34) und seitlich neben der Stütze (10) angeordnet ist.

13. Höhenverstellbare Stütze nach einem der vorhergehenden Ansprüche, wobei der Motor (32) an dem Gehäuse (36) der Übertragungseinheit (34) befestigt ist.

14. Stützvorrichtung für ein Fahrzeug, insbesondere einen Sattelauflieger, aufweisend zwei höhenverstellbare Stützen, welche über eine Verbindungswelle (26) derart gekoppelt sind, dass beide Stützen über eine gemeinsame Antriebseinheit (30) teleskopierbar sind,
wobei eine der Stützen eine Stütze (10) nach einem der vorhergehenden Ansprüche ist.

## Claims

1. A height-adjustable support for a vehicle, in particular a semi-trailer, having an outer support pipe (12), which can be mounted on the vehicle in a fixed manner,
an inner support pipe (14) which is displaceably supported in the outer support pipe (12) and which can be deployed out of the outer support pipe (12) and retracted into the outer support pipe (12) by means of a drive spindle,
a gear unit (60) which is arranged in the outer support pipe (12) and a drive unit (30) for driving the gear unit (60) for moving the inner support pipe (14) relative to the outer support pipe (12),
wherein the drive unit (30) has a motor (32) which is arranged outside the cross section of the outer support pipe (12) and a transmission unit (34), and
wherein a rotation axis which is defined by the motor shaft (46) of the motor (32) extends outside the outer support pipe (12) and the transmission unit (34) is configured to transmit a torque from the motor shaft (46) to the gear unit (60) which is arranged in the outer support pipe (12),
**characterized in that** the transmission unit (34) has a housing (36) and a drive pinion (56) which protrudes out of the housing (36) and which engages in the gear unit (60) which is arranged in the outer support pipe (12).

2. The height-adjustable support as claimed in claim 1,
wherein the motor (32) is arranged laterally beside the outer support pipe (12).

3. The height-adjustable support as claimed in either of the preceding claims, wherein there is provided a connection region (25) for a connection shaft (26) which extends from the gear unit (60) which is arranged in the outer support pipe (12) in the direction of an additional height-adjustable support, and wherein the transmission unit (34) is arranged at a side of the outer support pipe (12) which is opposite the connection region (25) for the connection shaft (26) and/or the additional height-adjustable support.

4. The height-adjustable support as claimed in one of the preceding claims,
wherein the gear unit (60) which is arranged in the outer support pipe (12) comprises a spur gear stage (62) which steps down and a bevel gear stage which is arranged downstream, and
wherein the transmission unit (34) is arranged upstream of the spur gear stage (62).

5. The height-adjustable support as claimed in one of the preceding claims,
wherein the drive pinion (56) is supported in a centering bush (38) which protrudes from the housing (36) of the transmission unit (34) and which is received in an input opening (28) of the outer support pipe (12).

6. The height-adjustable support as claimed in one of the preceding claims,
wherein the transmission unit (34) has between the motor shaft (46) and the drive pinion (56) at least two gear wheels.

7. The height-adjustable support as claimed in one of the preceding claims,
wherein at least one of the gear wheels, in particular a first and/or a last gear wheel of the transmission unit (34), is mounted on a sliding hub (58).

8. The height-adjustable support as claimed in one of the preceding claims,
wherein the transmission unit (34) has between the motor shaft (46) and the drive pinion (56) a drive wheel (48), an output wheel (52) and at least one intermediate wheel (50) which is arranged there between.

9. The height-adjustable support as claimed in one of the preceding claims,
wherein the drive unit (30) forms a unit which can be preassembled and which can be mounted on the outer support pipe (12), in particular screwed thereto.

10. The height-adjustable support as claimed in one of the preceding claims,
wherein at the front side of the support pipe (11), in particular the outer support pipe (12), there is provided an actuation device for manual retraction or deployment of the inner support pipe (14), wherein the actuation device preferably comprises a crank drive (74) having a crank handle (78).

11. The height-adjustable support as claimed in one of the preceding claims,
wherein the drive unit (30) is flange-mounted at the frontal or front side (20) of the outer support pipe (12), in particular in an upper region substantially at the height of the gear mechanism (60), and/or the motor (32) is arranged at the side of the support (10).

12. The height-adjustable support as claimed in one of the preceding claims,
wherein the motor (32) is arranged - when the support (10) is viewed from the front, that is to say, in the direction of a rotation axis of the spur gear stage (62) - spatially behind the transmission unit (34) and laterally beside the support (10).

13. The height-adjustable support as claimed in one of the preceding claims,
wherein the motor (32) is secured to the housing (36) of the transmission unit (34).

14. A support device for a vehicle, in particular a semi-trailer, having two height-adjustable supports which are coupled to each other by means of a connection shaft (26) in such a manner that both supports can be telescopically moved by means of a common drive unit (30),
wherein one of the supports is a support (10) as claimed in one of the preceding claims.

## Revendications

1. Support réglable en hauteur pour un véhicule, en particulier une semi-remorque, comportant
un tube de support extérieur (12) qui est susceptible d'être monté de façon stationnaire sur le véhicule,
un tube de support intérieur (14) qui est monté en translation dans le tube de support extérieur (12) et qui est déployable hors du tube de support extérieur (12) et rétractable dans le tube de support extérieur (12) par une broche d'entraînement,
un mécanisme (60) agencé dans le tube de support extérieur (12) et un ensemble d'entraînement (30) pour entraîner le mécanisme (60) pour déplacer le tube de support intérieur (14) par rapport au tube de support extérieur (12), l'ensemble d'entraînement (30) comprenant un moteur (32) agencé à l'extérieur de la section transversale du tube de support extérieur (12) ainsi qu'un ensemble de transmission (34), un axe de rotation défini par l'arbre (46) du moteur (32) s'étendant à l'extérieur du tube de support extérieur (12) et l'ensemble de transmission (34) étant conçu pour transmettre un couple de rotation de l'arbre de moteur (46) au mécanisme (60) agencé dans le tube de support extérieur (12),
**caractérisé en ce que** l'ensemble de transmission (34) comprend un boîtier (36) et un pignon d'entraînement (56) faisant saillie hors du boîtier (36) et s'engageant dans le mécanisme (60) agencé dans le tube de support extérieur (12).

2. Support réglable en hauteur selon la revendication 1, dans lequel le moteur (32) est agencé latéralement à côté du tube de support extérieur (12).

3. Support réglable en hauteur selon l'une des revendications précédentes, dans lequel est prévue une zone de raccordement (25) pour un arbre de liaison (26), qui s'étend à partir du mécanisme (60) agencé dans le tube de support extérieur (12) en direction d'un autre support réglable en hauteur, et
l'ensemble de transmission (34) est agencé sur un côté du tube de support extérieur (12) qui est opposé à la zone de raccordement (25) pour l'arbre de liaison (26) et/ou pour l'autre support réglable en hauteur.

4. Support réglable en hauteur selon l'une des revendications précédentes, dans lequel le mécanisme (60) agencé dans le tube de support extérieur (12) comprend un étage d'engrenage droit (62) de démultiplication ainsi qu'un étage d'engrenage conique agencé en aval, et
l'ensemble de transmission (34) est agencé en amont de l'étage d'engrenage droit (62).

5. Support réglable en hauteur selon l'une des revendications précédentes, dans lequel le pignon d'entraînement (56) est monté dans une douille de centrage qui fait saillie hors du boîtier (36) de l'ensemble de transmission (34) et qui est reçue dans une ouverture d'entrée (28) du tube de support extérieur (12).

6. Support réglable en hauteur selon l'une des revendications précédentes, dans lequel l'ensemble de transmission (34) comprend au moins deux engrenages entre l'arbre moteur (46) et le pignon d'entraînement (56).

7. Support réglable en hauteur selon l'une des revendications précédentes, dans lequel l'un au moins des engrenages, en particulier un premier et/ou un dernier engrenage de l'ensemble de transmission (34), est monté sur un moyeu de glissement (58).

8. Support réglable en hauteur selon l'une des revendications précédentes, dans lequel l'ensemble de transmission (34) comprend entre l'arbre moteur (46) et le pignon d'entraînement (56) une roue menant (48), une roue menée (52) et au moins une roue intermédiaire (50) interposée.

9. Support réglable en hauteur selon l'une des revendications précédentes, dans lequel l'ensemble d'entraînement (30) constitue un ensemble susceptible d'être prémonté qui peut être monté, en particulier vissé, sur le tube de support extérieur (12).

10. Support réglable en hauteur selon l'une des revendications précédentes, dans lequel, sur le côté frontal du tube de support (11), en particulier du tube de support extérieur (12), il est prévu un moyen d'actionnement pour une rétraction ou un déploiement manuel(le) du tube de support intérieur (14), le moyen d'actionnement comprenant de préférence un entraînement à manivelle (74) pourvu d'une manivelle à main (78).

11. Support réglable en hauteur selon l'une des revendications précédentes, dans lequel l'ensemble d'entraînement (30) est bridé sur le côté frontal ou avant (20) du tube de support extérieur (12), en particulier dans une zone supérieure approximativement à la hauteur du mécanisme (60), et/ou le moteur (32) est agencé latéralement à côté du support (10).

12. Support réglable en hauteur selon l'une des revendications précédentes, dans lequel, en observant le support (10) depuis le devant, donc en direction d'un axe de rotation de l'étage d'engrenage droit (62), le moteur (32) est agencé spatialement derrière l'ensemble de transmission (34) et latéralement à côté du support (10).

13. Support réglable en hauteur selon l'une des revendications précédentes, dans lequel le moteur (32) est fixé au boîtier (36) de l'ensemble de transmission (34).

14. Dispositif de support pour un véhicule, en particulier pour une semi-remorque, comportant aux supports réglables en hauteur qui sont couplés l'un à l'autre par un arbre de liaison (26) de telle sorte que les deux supports sont mobiles de façon télescopique par un ensemble d'entraînement commun (30), l'un des supports étant un support (10) selon l'une des revendications précédentes.
